# EUROPÄISCHE PATENTSCHRIFT

(11) **EP 0 610 580 B1**
(45) Veröffentlichungstag und Bekanntmachung des Hinweises auf die Patenterteilung: **21.05.1997**
(21) Anmeldenummer: 93120287.3
(22) Anmeldetag: 16.12.1993
(51) Int. Cl.: A01D 90/10

(54) **Ladewagen mit Rückwand**
Loading wagon with rear door
Chariot chargeur avec porte arrière

(30) Priorität: 11.02.1993 DE 4304040
(43) Veröffentlichungstag der Anmeldung: 17.08.1994
(73) Patentinhaber: CLAAS SAULGAU GMBH, D-88340 Saulgau (DE)
(72) Erfinder: Geng, Manfred, D-88348 Saulgau-Bogenweiler (DE)

(56) Entgegenhaltungen:
- EP-A- 0 483 625
- AT-B- 391 581
- DE-A- 3 931 575

## Beschreibung

Die Erfindung bezieht sich auf einen Ladewagen nach dem Gattungsbegriff des Anspruches 1.

Ein derartiger Ladewagen ist zum Beispiel durch das Deutsche Gebrauchsmuster 66 01 710 bekannt. Gegenüber der dort offenbarten Ausführung soll ein Mechanismus für das Schließen und Öffnen der Rückwand geschaffen werden, der weniger Bauteile aufweist, insbesondere weniger Gelenkstellen und der deshalb eine größere Steifigkeit hat. Dadurch soll neben einem geringeren Bauaufwand erreicht werden, daß die Verformung der an der mechanischen Verriegelung beteiligten Bauteile so gering ist, daß die Verriegelung auch dann gesichert ist, wenn die Ladung von innen her einen Druck auf die Rückwand ausübt. Außerdem soll vermieden werden, daß zur Betätigung der Rückwand benötigte Bauteile unter der Unterkante des Fahrzeugrahmens herausstehen und dadurch beim Rückwärtsfahren gegen ein Silo oder dergleichen stören.

Die Aufgaben werden erfindungsgemäß dadurch gelöst, daß ein aus einer Zunge und einer Tasche gebildeter Riegel entsprechend dem Anspruch 1 dadurch verwirklicht wird, daß die Zunge und die Tasche einen festen Teil der Rückwand und des Fahrzeugrahmens darstellen und daß Zunge und Tasche durch einen Hubzylinder in Wirkverbindung gebracht und gehalten werden.

In den folgenden Ansprüchen wird offenbart, wie die Rückwand mit den zu ihrem Verschluß benötigten Bauteilen auch in einfacher Weise ausgehoben werden kann. Durch Flächen, die sich beim Verschließen der Rückwand gegeneinander anlegen, wird ein Klappern der Rückwand bei unbeladenem Wagen vermieden. Weiterhin wird gezeigt, daß die Hubzylinder nur so stark dimensioniert werden müssen, daß sie die Gewichtskraft der Rückwand überwinden, während eine von der Ladung auf die Innenseite der Rückwand ausgeübte Druckkraft nach Überwindung einer begrenzten Beweglichkeit von der mechanischen Verriegelung aufgenommen wird. Die Beweglichkeit in der Verriegelung kann nach den Ansprüchen 8 und 9 auch zur Hervorrufung von Steuerimpulsen benutzt werden.

Die Erfindung wird anhand von 3 Abbildungen beispielsweise erläutert.
- Fig. 1: zeigt den hinteren Teil eines Ladewagens mit einer Rückwand von der Seite im geschlossenen Zustand
- Fig. 2: zeigt eine Einzelheit x (Fig. 1) vergrößert
- Fig. 3: zeigt den Gegenstand von Fig. 1 ausgezogen in einer Entriegelungsstellung der Rückwand und strichpunktiert in einer Aushubstellung der Rückwand.

Ein Wagenkasten (1) wird von einem Fahrzeugrahmen (2) getragen, der seinerseits auf Laufrädern (3) aufsitzt. Der Wagenkasten (1) wird durch einen Spant (4) versteift. Mit diesem fest verbunden sind Seitenwände (5). Zwischen den Seitenwänden (5) sind Abfräswalzen (6) drehbar gelagert. Der Boden des Wagenkastens wird durch einen Rollboden (7) gebildet, der die Aufgabe hat, die Wagenladung von ihrem vorderen Eintritt nach hinten zu befördern. Das hintere Ende des Fahrzeugrahmens (2) wird von einem fest mit ihm verbundenen Bügel (8) gebildet, der einen nach unten offenen Schlitz (9) besitzt, der als Tasche für einen Riegel dient. Die Rückwand des Bügels (8) wird durch eine ebene Fläche (10) gebildet. An der Seitenwand (5) ist an einem Zapfen (11) ein doppelt wirkender Hubzylinder (12) mit einem nicht dargestellten ansteuerbaren Rückschlagventil schwenkbar gelagert. Mit einem weiteren Gelenkzapfen (26), der fest mit der Seitenwand (5) verbunden ist, ist eine Steuerstange (13) längs und schwenkbeweglich gelagert. Die Steuerstange (13) hat an ihrem oberen Ende eine schlitzführung (14), in die der Gelenkzapfen (26) eingreift. An einem Ansatz (15) der Steuerstange (13) ist die Kolbenstange (16) des Hubzylinders (12) angelenkt.

An einem Drehgelenk (17), das mit dem Spant (4) fest verbunden ist, ist eine Schwinge (18) gelagert. An ihrem anderen Ende besitzt die Schwinge (18) eine Gelenkstelle (19), an der die eigentliche Rückwand (20) pendelnd aufgehägt ist. Nahe ihrem unteren Ende hat die Rückwand (20) eine Fläche (21), die sich im abgesenkten Zustand der Rückwand (20) an die Fläche (10) des Bügels (8) anlegt. Am unteren Ende der Rückwand (20) ist eine fingerförmige Zunge (22), die in einer hochgezogenen Stellung der Rückwand (20) von unten her in den Schlitz (9) des Bügels (8) eindringt. Die Steuerstange (13) ist mittels eines Gelenkpunktes (23) mit der Rückwand (20) verbunden. Im inneren des Bügels (8) ist ein Schalter (24) befestigt, der durch Kontakt mit der Zunge (22) einen Steuerimpuls erzeugen kann. Ein zweiter Schalter (25) ist an der Seitenwand (5) befestigt. Er kann durch Berührung mit der Steuerstange (13) einen Steuerimpuls auslösen.

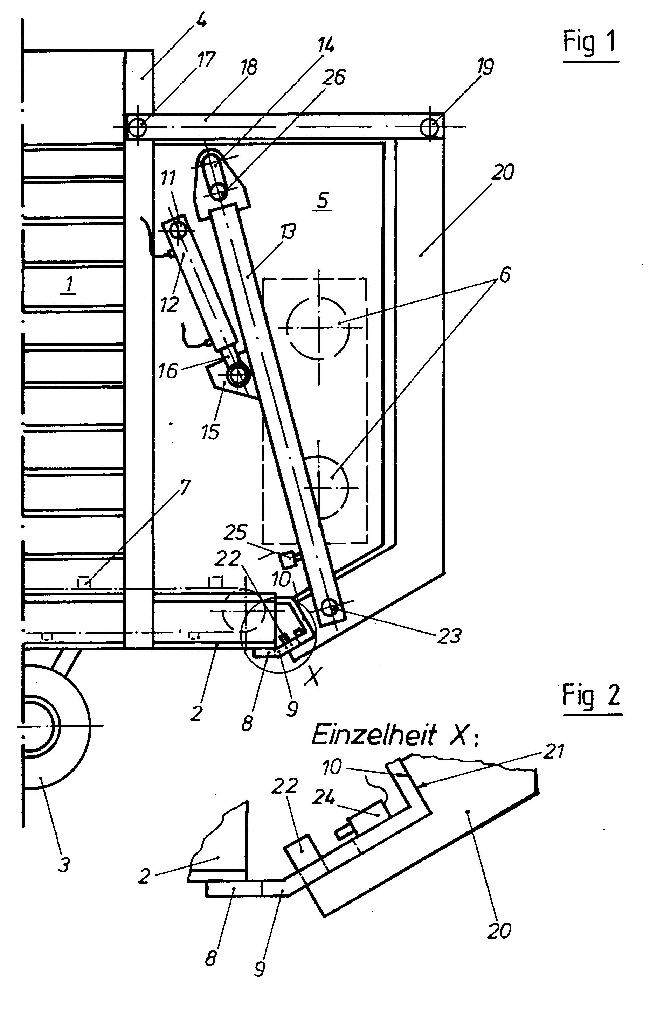

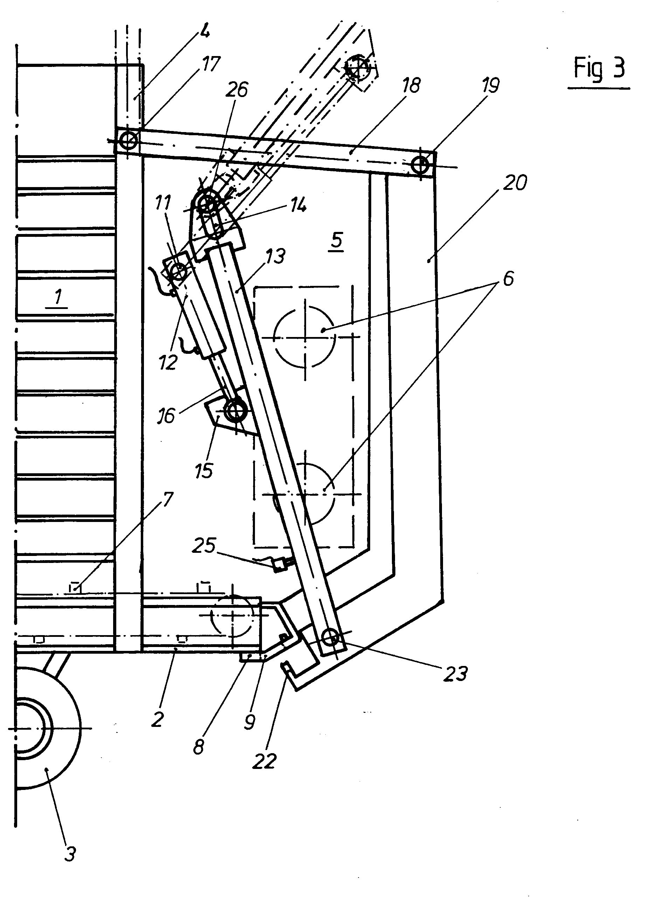

Wenn die Rückwand (20) von der geschlossenen Stellung (Fig. 1) ausgehend ausgehoben werden soll, wird die Kolbenstange (16) des Hubzylinders (12) ausgefahren. Dadurch wird die Steuerstange (13) so weit nach unten bewegt, als es die Schlitzführung (14) und der Gelenkzapfen (26) zulassen. Die Rückwand (20) hat dann eine Stellung, wie sie in Figur 3 ausgezogen dargestellt ist. Die Zunge (22) ist ganz aus dem Schlitz (9) herausgetreten, die mechanische Verriegelung ist aufgehoben. Die Flächen (10) und (21) berühren sich aber noch. Wenn die Kolbenstange (16) weiter ausgefahren wird, entsteht auf die Rückwand (20) ein linksdrehendes Moment, wodurch die Rückwand (20) samt der Schwingen (18) so weit nach oben verschwenkt, bis sie die strichpunktierte Stellung in Figur 3 einnehmen.

Zum Schließen der Rückwand (20) wird die Kolbenstange (16) eingefahren, bis die in Figur 3 ausgezogen gezeichnete Stellung erreicht ist. Die Steuerstange (13) gibt jetzt zusammen mit dem Schalter (25) ein Signal, das bewirkt, daß die Kolbenstange (16) nicht in dieser Stellung beharrt, sondern hydraulisch weiter eingefahren wird, bis die Stellung erreicht wird, die in Figuren 1 und 2 dargestellt ist. Durch Beibehalten des hydraulischen Druckes im Hubzylinder (12) entsteht ein rechtsdrehendes Moment auf die Rückwand (20), das diese in der geschlossenen Stellung hält. Wenn beim Beladen des Wagens durch fortwährende Betätigung des Rollbodens (7) ein hoher Druck durch das Ladegut auf die Rückwand ausgeübt wird, kann dem die Kraft des Hubzylinders nicht mehr standhalten. Die Rückwand (20) wird dann so weit nach außen gedrückt, als es die Zunge (22) in dem Schlitz (9) zuläßt. In dieser Lage bleibt die Rückwand (20) mechanisch verriegelt. Gleichzeitig betätigt die Zunge (22) aber den Schalter (24), der einen Steuerimpuls zur Stillsetzung des Antriebes des Rollbodens (7) bewirkt.

Für eine gleichwirkende Ausführung des Anmeldungsgegenstandes kann in kinematischer Umkehr die Tasche (9) des Riegels (9, 22) auch in der Rückwand (20) und die Zunge (22) im Bügel (8) des Fahrzeugrahmens (2) angeordnet sein. Ähnliches ist auch bezüglich der Anordnung der Schlitzführung (14) in den Steuerstangen (13) denkbar.

## Patentansprüche

1. Ladewagen mit Rückwand (20), die mittels Schwingen (18) mit den Seitenwänden (5) des Ladewagens verbunden ist und mit hydraulischen Hubzylindern (12) geöffnet und geschlossen werden kann und die in der geschlossenen Stellung zusätzlich mechanisch verriegelt ist, dadurch gekennzeichnet, daß die Zunge (22) des Riegels (9, 22) durch einen festen Teil der Rückwand (20) gebildet wird und daß die Tasche (9) des Riegels (9, 22) durch einen festen Teil (8) des Fahrzeugrahmens (2) gebildet wird oder umgekehrt, und daß diese Zunge (22) durch die Wirkung eines oder mehrerer Hubzylinder (12) in der Verriegelungsstellung gehalten wird.

2. Ladewagen mit Rückwand (20) nach Anspruch 1, dadurch gekennzeichnet, daß die Hubzylinder (12) einerseits schwenkbeweglich mit einer Seitenwand (5) des Ladewagens verbunden sind, während sie andererseits schwenkbeweglich mit Steuerstangen (13) verbunden sind, die ihrerseits am oberen Ende mittels einer Schlitzführung (14) längsbeweglich und schwenkbar an der Seitenwand (5) des Ladewagens gelagert und an ihrem unteren Ende (23) drehbeweglich mit der Rückwand (20) verbunden sind.

3. Ladewagen nach Anspruch 2, dadurch gekennzeichnet, daß die Steuerstangen (13) in der geschlossenen Stellung (Figur 1) der Rückwand (20) durch die Hubzylinder (12) in der durch die Schlitzführung (14) bedingten höchstmöglichen Stellung gehalten werden und daß dadurch die Zungen (22) der Riegel (9, 22) in den Taschen (9) festgehalten werden.

4. Ladewagen nach den Ansprüchen 1 bis 3, dadurch gekennzeichnet, daß Flächen (21) im unteren Bereich der Rückwand (20) mit Flächen (10) am Fahrzeugrahmen (2) derart zusammenwirken, daß sie die Schließbewegung der Rückwand (20) begrenzen.

5. Ladewagen nach den Ansprüchen 1 bis 4, dadurch gekennzeichnet, daß die Taschen (9) so weit sind, daß sie in der Schließstellung (Figur 1) eine begrenzte Querbeweglichkeit der Zungen (22) der Riegel (9, 22) zulassen.

6. Ladewagen nach den Ansprüchen 1 bis 5, dadurch gekennzeichnet, daß zum Öffnen der Rückwand (20) (Figur 3) die Kolbenstangen (16) der Hubzylinder (12) so weit ausgefahren werden, daß sich die Steuerstangen (13) in die durch die Schlitzführung (14) begrenzte unterste Stellung bewegen, wodurch die mechanische Verriegelung aufgehoben wird und bei fortgesetzter Bewegung der Kolbenstange (16) die Rückwand (20) samt ihren zugehörigen Schwingen (18) ausgehoben wird.

7. Ladewagen nach den Ansprüchen 5 und 6, dadurch gekennzeichnet, daß sich die Rückwand (20) in der geschlossenen Stellung unter der Wirkung eines durch die Wagenladung bewirkten Überdrucks innerhalb der begrenzten Bewegbarkeit in der mechanischen Verriegelung (9, 22) entgegen der Wirkung der Hubzylinder (12) soweit bewegen kann, daß sich die Flächen (21) an der Rückwand (20) und die Flächen (10) am Maschinenrahmen (2) voneinander abheben.

8. Ladewagen nach Anspruch 7, dadurch gekennzeichnet, daß durch die Bewegung der Rückwand (20), die das Abheben der Flächen (10, 21) bewirkt, ein Steuerimpuls ausgelöst wird, der die Vorschubbewegung eines im Ladewagen vorhandenen Rollbodens (7) stillsetzt.

9. Ladewagen nach den Ansprüchen 4 bis 8, dadurch gekennzeichnet, daß beim Aufeinandertreffen der Flächen (10, 21) an der Rückwand (20) und am Maschinenrahmen (2) oder kurz vorher, ein Steuerimpuls ausgelöst wird, der entweder direkt oder durch ein Signal an den Fahrer ein Einfahren der Hubzylinder (12) bis in ihre innere Endstellung bewirkt.

## Claims

1. A loading wagon with a rear wall (20) which is connected to the side walls (5) of the loading wagon by means of swing arms (18) and which can be opened and closed by hydraulic stroke cylinders (12) and which is additionally mechanically locked in the closed position, characterised in that the tongue (22) of the lock member (9, 22) is formed by a fixed part of the rear wall (20) and that the pocket (9) of the lock member (9, 22) is formed by a fixed part (8) of the vehicle frame (2) or vice-versa and that said tongue (22) is held in the locking position by the action of one or more stroke cylinders (12).

2. A loading wagon with a rear wall (20) according to claim 1 characterised in that the stroke cylinders (12) on the one hand are pivotably movably connected to a side wall (5) of the loading wagon while on the other hand they are pivotably movably connected to control bars (13) which in turn are mounted at the upper end by means of a slot guide (14) longitudinally movably and pivotably to the side wall (5) of the loading wagon and at their lower end (23) are rotatably connected to the rear wall (20).

3. A loading wagon according to claim 2 characterised in that in the closed position (Figure 1) of the rear wall (20) the control bars (13) are held by the stroke cylinders (12) in the highest possible position governed by the slot guide (14) and that thereby the tongues (22) of the lock members (9, 22) are held fast in the pockets (9).

4. A loading wagon according to claims 1 to 3 characterised in that surfaces (21) in the lower region of the rear wall (20) co-operate with surfaces (10) on the vehicle frame (2) in such a way that they limit the closing movement of the rear wall (20).

5. A loading wagon according to claims 1 to 4 characterised in that the pockets (9) are so wide that in the closed position (Figure 1) they permit a limited transverse mobility of the tongues (22) of the lock members (9, 22).

6. A loading wagon according to claims 1 to 5 characterised in that to open the rear wall (20) (Figure 3) the piston rods (16) of the stroke cylinders (12) are extended so far that the control bars (13) move into the lowermost position which is defined by the slot guide (14) whereby the mechanical locking action is released and upon continued movement of the piston rod (16) the rear wall (20) together with its associated swing arms (18) is lifted out.

7. A loading wagon according to claims 5 and 6 characterised in that in the closed position the rear wall (20) can move under the action of an increased pressure produced by the wagon load within the limited mobility in the mechanical locking means (9, 22) in opposition to the action of the stroke cylinders (12) so that the surfaces (21) on the rear wall (20) and the surfaces (10) on the machine frame (2) lift away from each other.

8. A loading wagon according to claim 7 characterised in that the movement of the rear wall (20) which causes the surfaces (10, 21) to lift off each other triggers a control pulse which stops the advance movement of a roller floor (7) provided in the loading wagon.

9. A loading wagon according to claims 4 to 8 characterised in that when the surfaces (10, 21) on the rear wall (20) and on the machine frame (2) meet or shortly previously a control pulse is triggered which either directly or by a signal to the driver causes retraction of the stroke cylinders (12) into their inner limit position.

## Revendications

1. Chariot chargeur muni d'une paroi postérieure (20) qui est reliée aux parois latérales (5) du chariot chargeur au moyen de biellettes (18), peut être ouverte et fermée par des vérins hydrauliques de levage (12) et est additionnellement verrouillée, en mode mécanique, dans la position fermée, caractérisé par le fait que la languette (22) du verrou (9, 22) est formée par une partie fixe de la paroi postérieure (20) ; par le fait que le logement (9) du verrou (9, 22) est formé par une partie fixe (8) du châssis (2) du véhicule, ou inversement ; et par le fait que ladite languette (22) est retenue dans la position de verrouillage sous l'action d'un ou plusieurs vérin(s) de levage (12).

2. Chariot chargeur muni d'une paroi postérieure (20), selon la revendication 1, caractérisé par le fait que les vérins de levage (12) sont reliés d'une part, avec faculté de pivotement, à une paroi latérale (5) du chariot chargeur, tandis qu'ils sont d'autre part reliés, avec faculté de pivotement, à des tiges de commande (13) qui sont à leur tour montées avec faculté de mouvement longitudinal et de pivotement sur la paroi latérale (5) du chariot chargeur, à l'extrémité supérieure, au moyen d'un système (14) de guidage par boutonnières, et sont reliées à la paroi postérieure (20) par leur extrémité inférieure (23), avec faculté de rotation.

3. Chariot chargeur selon la revendication 2, caractérisé par le fait que, dans la position fermée (figure 1) de la paroi postérieure (20), les tiges de commande (13) sont retenues, par les vérins de levage (12), dans la position la plus haute possible conditionnée par le système (14) de guidage par boutonnières ; et par le fait que les languettes (22) des verrous (9, 22) sont, de la sorte, consignées fermement à demeure dans les logements (9).

4. Chariot chargeur selon les revendications 1 à 3, caractérisé par le fait que des surfaces (21) situées dans la région inférieure de la paroi postérieure (20) coopèrent avec des surfaces (10) situées sur le châssis (2) du véhicule, de façon telle qu'elles limitent le mouvement de fermeture de la paroi postérieure (20).

5. Chariot chargeur selon les revendications 1 à 4, caractérisé par le fait que les logements (9) sont suffisamment larges pour autoriser, dans la position de fermeture (figure 1), une mobilité transversale limitée des languettes (22) des verrous (9, 22).

6. Chariot chargeur selon les revendications 1 à 5, caractérisé par le fait que, pour procéder à l'ouverture de la paroi postérieure (20) (figure 3), les tiges (16) des pistons des vérins de levage (12) sont déployées d'une distance telle que les tiges de commande (13) se déplacent jusqu'à la position la plus basse, limitée par le système (14) de guidage par boutonnières, d'où il résulte que le verrouillage mécanique est neutralisé et que, lorsque le mouvement de la tige (16) de piston se poursuit, la paroi postérieure (20) est soulevée conjointement aux biellettes (18) qui lui sont associées.

7. Chariot chargeur selon les revendications 5 et 6, caractérisé par le fait que, dans la position fermée, la paroi postérieure (20) peut accomplir sous l'effet d'une surpression provoquée par le chargement du chariot, dans les limites de la mobilité restreinte à l'intérieur du système (9, 22) de verrouillage mécanique, en s'opposant à l'action des vérins de levage (12), un mouvement d'une ampleur telle que les surfaces (21) situées sur la paroi postérieure (20), et les surfaces (10) situées sur le châssis (2) de la machine, se soulèvent à l'écart les unes des autres.

8. Chariot chargeur selon la revendication 7, caractérisé par le fait que le mouvement de la paroi postérieure (20), provoquant le soulèvement des surfaces (10, 21), implique le déclenchement d'une impulsion de commande qui stoppe le mouvement d'avance d'un fond roulant (7) présent dans le chariot chargeur.

9. Chariot chargeur selon les revendications 4 à 8, caractérisé par le fait que, lors de la rencontre des surfaces (10, 21) situées sur la paroi postérieure (20) et sur le châssis (2) de la machine, ou un court instant auparavant, il est déclenché une impulsion de commande qui provoque soit directement, soit par l'intermédiaire d'un signal délivré au conducteur, une rétraction des vérins de levage (12) jusqu'à leur position extrême intérieure.
